(19) Europäisches Patentamt
European Patent Office
Office européen des brevets

(11) Veröffentlichungsnummer: **0 140 297**
**A2**

# (12) EUROPÄISCHE PATENTANMELDUNG

(21) Anmeldenummer: **84112590.9**

(22) Anmeldetag: **18.10.84**

(51) Int. Cl.⁴: **C 07 C 155/02**
C 08 K 5/39

(30) Priorität: **21.10.83 US 544295**

(43) Veröffentlichungstag der Anmeldung:
**08.05.85 Patentblatt 85/19**

(84) Benannte Vertragsstaaten:
**DE FR GB IT**

(71) Anmelder: **CIBA-GEIGY AG**
**Postfach**
**CH-4002 Basel(CH)**

(72) Erfinder: **Spivack, John D.**
**1 Blue Jay Street**
**Spring Valley New York 10977(US)**

(72) Erfinder: **Pastor, Stephen D.**
**112 Union Road**
**Spring Valley New York 10977(US)**

(74) Vertreter: **Zumstein, Fritz sen., Dr. et al,**
**Bräuhausstrasse 4**
**D-8000 München 2(DE)**

(54) **Thiocarbamat Stabilisatoren.**

(57) Verbindungen der Formel

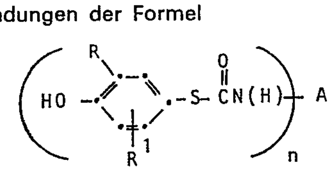

eignen sich ausgezeichnet zum Stabilisieren von organischem Material, insbesondere Kunststoffen und mineralischen oder synthetischen Schmierstoffen.

EP 0 140 297 A2

CIBA-GEIGY AG 3-14625/=

Basel (Schweiz)

# Thiocarbamat Stabilisatoren

Die vorliegende Erfindung betrifft Thiocarbamat Stabilisatoren, der Verwendung als Stabilisatoren, sowie das damit ausgerüstete organische Material.

Es ist bekannt, organischem Material, wie organischen Polymeren oder Schmiermitteln Additive zuzufügen, um diese Substrate vor durch Licht oder Luftsauerstoff initierten Abbau zu schützen. An Additive werden hohe Anforderungen gestellt, wobei es darum geht, die Alterungserscheinungen zu verhindern oder zumindest stark zu verzögern. So sollen Vergilbungserscheinungen, Verlust an Oberflächenglanz oder Transparenz, ferner Verlust an Schlagzähigkeit, Biegefestigkeit, Reissfestigkeit und Dehnung weitgehend unterdrückt werden.

Die Thiocarbamate der vorliegenden Erfindung erfüllen in hohem Mass diese Anforderung und besitzen eine Kombination erwünschter Eigenschaften. Insbesondere geeignet sind die erfindungsgemässen Stabilisatoren für die Ausrüstung von Polyolefinen, Polystyrol, Polybutadien, Styrol-Butadien Kautschuk, und anderen Elastomeren, insbesondere dort, wo es auf Elastizität und Unterdrückung von Vernetzung, Verfärbung, Rissbildung, Geruchsproblemen u.a. geht.

Verschiedene 2-(3,5-Di-t.butyl-4-hydroxyphenyl)-thiohexamide sind im US 4,029,812 offenbart. Diese sind strukturell jedoch von den vorliegenden Verbindungen verschieden und zudem geeignet, den Fettgehalt in Blut zu senken.

Die Verbindungen der vorliegenden Erfindung entsprechen der Formel I

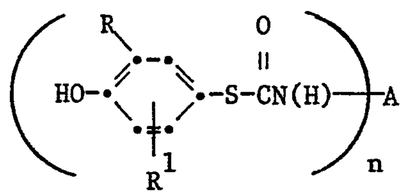

(I) ,

worin

R und $R^1$ unabhängig voneinander Wasserstoff, $C_1$-$C_{18}$-Alkyl, $C_5$-$C_6$-Cycloalkyl, Phenyl, $C_7$-$C_{18}$-Alkylphenyl, $C_7$-$C_9$-Phenylalkyl oder mit $C_1$-$C_{12}$-Alkyl substituiertes Phenylalkyl bedeuten, und n 1, 2 oder 3 ist, und falls n 1 ist, A $C_1$-$C_{30}$-Alkyl, $C_5$-$C_6$-Cycloalkyl, Phenyl oder $C_1$-$C_4$-Alkylbenzyl bedeutet und falls n 2 ist, A $C_1$-$C_{10}$-Alkylen, $C_5$-$C_6$-Cycloalkylen, $C_1$-$C_4$-Alkyl- und/oder Alkylen-substituiertes $C_5$-$C_6$-Cycloalkylen, Arylen, Biphenylen, Hydroxy-substituiertes Arylen oder Polyoxyalkylen mit 2 - 4 C-Atomen in den sich wiederholenden Einheiten bedeutet, und falls n 3 ist, A Arylen, Biphenylen, Hydroxy-substituiertes Arylen oder ferner $C_3$-$C_6$-Alkantriyl ist.

Bevorzugte Verbindungen sind solche der Formel I, worin beide R und $R^1$ in o-Stellung zur Hydroxygruppe sind. Die Gruppen R und $R^1$ sind vorzugsweise geradkettige, insbesondere verzweigte Reste mit 1-8 C-Atomen, wie Methyl, i-Propyl, n-Butyl, sec.-Butyl, t.-Butyl, t.-Pentyl, 2-Ethylhexyl, n-Octyl oder 1,1,3,3-Tetramethylbutyl. Die Gruppen Methyl, t.-Butyl, t.-Pentyl und 1,1,3,3-Tetramethylbutyl sind ganz besonders bevorzugt.

Sind R und $R^1$ $C_5$-$C_6$ Cycloalkyl so handelt es sich um Cyclopentyl und Cyclohexyl.

Als $C_7$-$C_{18}$-Alkylphenyl sind R und $R^1$ Phenyl, welche mit einer bis drei $C_1$-$C_{12}$-Alkylgruppen, wie Methyl, Ethyl, n-Propyl, i-Propyl, n-Butyl, sec.-Butyl, t.-Butyl, n-Pentyl, t.-Pentyl, n-Hexyl,

geradkettiges oder verzweigtes Heptyl, Octyl, Nonyl, Decyl, Undecyl oder Dodecyl substituiert sind, wobei die Gesamt-C-Zahl der Alkylsubstituenten 1-12 ist. Diese Definitionen gelten sinngemäss auch für mit $C_1$-$C_{12}$-Alkyl substituiertes Phenylalkyl.

$C_7$-$C_9$-Phenylalkyl ist z.B. Benzyl, α-Methylbenzyl oder α,α-Dimethylbenzyl.

A ist als $C_1$-$C_{30}$-Alkyl z.B. Methyl, Ethyl, n-Propyl, sec.-Butyl, t.-Butyl, n-Pentyl, n-Hexyl, 2-Ethylhexyl, n-Octyl, 1,1,3,3-Tetramethylbutyl, , geradkettiges oder verzweigtes Nonyl, Decyl, Dodecyl, Tetradecyl, Octadecyl, Eicosyl, Tetracosyl oder Triacontyl.

A als $C_5$-$C_6$-Cycloalkyl ist Cyclopentyl oder Cyclohexyl und als $C_1$-$C_4$-Alkylbenzyl z.B. 4-Methylbenzyl, 2-Methylbenzyl, 2-t.-Butylbenzyl, 2-Ethylbenzyl oder 4-Isopropylbenzyl.

Ist A $C_1$-$C_{10}$-Alkylen, so handelt es sich beispielsweise um Methyl, Ethylen-1,2, Propylen-1,3, Tetramethylen-1,4; Hexamethylen-1,6; Decamethylen-1,10 oder Ethyliden. Bevorzugt ist $C_4$-$C_8$-Alkylen und insbesondere Hexylen.

Als $C_5$-$C_6$-Cycloalkylen ist A z.B. Cyclopentylen-1,2; Cyclopentylen-1,3 oder Cyclohexylen-1,4.

A als Arylen ist z.B. Phenylen-1,2 oder Phenylen-1,4; falls n 2 ist und Phenylen-1,2,3; Phenylen-1,3,5 oder Phenylen-1,2,4, falls n 3 ist.

A als Alkantriyl ist beispielsweise Propantriyl-1,2,3; Butantriyl-1,2,4 oder Hexantriyl-1,2,6.

Bevorzugte Verbindungen sind jene der Formel I, worin, falls n 1 ist, A $C_4$-$C_{18}$-Alkyl oder Phenyl bedeutet und, falls n 2 ist, A $C_4$-$C_8$-

Alkylen, Phenylen oder $C_1$-$C_4$-Alkyl-substituiertes Cyclohexylen ist, und falls n 3 ist, A 1,3,5-Benzoltriyl bedeutet. R und $R^1$ sind vorzugsweise t.-Butyl.

Die Verbindungen der Formel I können auf an sich bekannte Weise hergestellt werden, z.B. durch Umsetzung des entsprechenden Mercaptophenol mit einem Isocyanat in Gegenwart eines Säureakzeptors, wie Lithiumsalzen, t.-Aminen, Alkali- oder Erdalkalimetallhydroxiden oder -carbonaten. Vorzugsweise wird die Reaktion in einem Lösungsmittel durchgeführt, z.B. in Benzol, Toluol, Xylol oder in Heptan. Die Reaktionstemperatur beträgt üblicherweise 0 - 70°C. Die Ausgangsprodukte sind bekannt und im Handel erhältlich oder können nach bekannten Methoden hergestellt werden.

Die Verbindungen der vorliegenden Erfindung sind wirksame Stabilisatoren für organisches Material wie Kunststoffe, Polymere und Harze oder auch für synthetische Flüssigkeiten, wie Schmiermittel etc.

Speziell gute Effekte können in folgenden Substraten erzielt werden: Polyolefine, wie Polyethylen niedriger, mittlerer oder höherer Dichte, Polypropylen, ferner Polystyrol, ABS, SBR, Isopren und auch natürlicher Kautschuke, und auch Polyester, wie Polyethylen- oder Polybutylenterephthalat, sowie mineralische oder synthetische Schmiermittel.

Generell eignen sich die Verbindungen der Formel I als Additive für folgende Substrate:

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.

2. Mischungen der unter 1) genannten Polymeren, z.B. Mischungen von Polypropylen mit Polyisobutylen.

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly-(p-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer wie z.B. einem Polyacrylat, einem Dien-Polymeren oder einem Ethylen-Propylen-Dien-Terpolymeren;

sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS, MBS, ASA oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.

8. Polymere, die sich von α,ß-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere wie z.B. Ethylenoxid enthalten.

13. Polyphenyloxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylen-isophthalamid, sowie deren Block-Copolymere mit Polyethern wie z.B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten, oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren wie z.B. PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellithate), sowie Abmischungen synthetischer Ester mit Mineralölen in beliebigen Gewichtsverhältnissen, wie sie z.B. als Spinnpräparationen Anwendung finden, sowie deren wässrigen Emulsionen.

29. Wässrige Emulsionen natürlicher oder synthetischer Kautschuke, wie z.B. Naturkautschuk-Latex oder Latices von carboxylierten Styrol-Butadien-Copolymeren.

Ueblicherweise können die Additive in Konzentrationen von 0,01 bis 5 Gewichts-% dem zu schützenden Substrat einverleibt werden. Bevorzugt sind Konzentrationen von 0,5 bis 2 % und insbesondere von 0,1 bis 1 %.

Die Einarbeitung der Additive ins Substrat erfolgt auf übliche Weise, vor, während oder nach der Polymerisation. Neben den Verbindungen der Formel I können dem Substrat auch andere Zusatzstoffe beigefügt werden, z.B.

## 1. Antioxidantien

### 1.1. Alkylierte Monophenole

2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

### 1.2. Alkylierte Hydrochinone

2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

### 1.3. Hydroxylierte Thiodiphenylether

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

### 1.4. Alkyliden-Bisphenole

2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)

2,2'-Methylen-bis-(4,6-di-tert.butylphenol)
2,2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methlyen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercapto-butan
Ethylenglycol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.

1.5 Benzylverbindungen

1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
3,5-Di-tert.butyl-4-hydroxybenzyl-phosphonsäure-monoethylester, Calcium-salz.

1.6. Acylaminophenole

4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.

1.7. Ester der ß-(3,5-Di-tert.butyl-4-hydroxyphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.8. Ester der ß-(5-tert.butyl-4-hydroxy-3-methylphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.9. Amide der ß-(3,5-Di-tert.butyl-4-hydroxyphenyl)-propionsäure, wie z.B.
N,N'-Di-(3,5-di-tert.butyl-4-hydroxyphenylpropionyl)-hexamethylendiamin
N,N'-Di-(3,5-di-tert.butyl-4-hydroxyphenylpropionyl)-trimethylendiamin
N,N'-Di-(3,5-di-tert.butyl-4-hydroxyphenylpropionyl)-hydrazin

2. UV-Absorber und Lichtschutzmittel

2.1. 2-(2'-Hydroxyphenyl)-benztriazole, wie z.B. das 5'-Methyl-, 3',5'-Di-tert.butyl-, 5'-Tert.butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-Tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-ß,ß-diphenylacrylsäure-ethylester bzw. -isooctylester, α-Carbomethoxy-zimtsäuremethylester, α-Cyano-ß-methyl-p-methoxy-zimtsäuremethylester bzw. -butylester, α-Carbomethoxy-p-methoxy-zimtsäure-methylester, N-(ß-Carbomethoxy-ß-cyanovinyl)-2-methyl-indolin,

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethylpiperidyl)-sebacat

Bis-(1,2,2,6,6-pentamethylpiperidyl)-sebacat

n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin,

Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von ortho-und para-Methoxy- sowie von o- und p-Ethoxy-di-substituierte Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit.

5. Peroxidzerstörende Verbindungen, wie z.B. Ester der ß-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(ß-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Beispiel 1: S-(3,5-Di-t.-butyl-4-hydroxyphenyl)-N-phenyl-thiocarbamat.

Unter Stickstoff wird eine Lösung von 23,84 g 2,6-Di-t.-butyl-4-mercaptophenol und 0,5 g Triethylamin in 100 ml Toluol in einen Kolben gegeben und während einer Stunde eine Lösung von 11,91 g Phenylisocyanat zugetropft. Die Temperatur wird während dieser Zeit unter 31°C gehalten. Der entstehende Festkörper wird filtriert und umkristallisiert und ergibt 30 g (84 % der Theorie) weisser Kristalle mit einem Schmelzpunkt von 195-197°C.

Beispiel 2: S-(3-t.-Butyl-5-methyl-4-hydroxyphenyl)-N-octadecyl-thiocarbamat.

Das in Beispiel 1 beschriebene Verfahren wird wiederholt, wobei 18,63 g 2-t.-Butyl-6-methyl-4-mercaptophenol, 29,55 g Octadecylisocyanat und 0,5 g Triethylamin eingesetzt werden. Die Umkristallisation aus Heptan ergibt 41,01 g (84 % der Theorie) weisser Kristalle mit einem Schmelzpunkt von 92-93°C.

Beispiel 3: S-(3,5-Di-t.-butyl-4-hydroxyphenyl)-N-butylthiocarbamat.

Das in Beispiel 1 beschriebene Verfahren wird wiederholt, wobei 20,0 g 2,6-Di-t.-butyl-4-mercaptophenol, 8,3 g n-Butylisocyanat und 0,5 g Triethanolamin eingesetzt werden. Der Rückstand wird aus Hexan umkristallisiert und ergibt 24,6 g (87 % der Theorie) weisser Kristalle mit einem Schmelzpunkt von 96-98°C.

Beispiel 4: S,S'-Di-(3,5-di-t.-butyl-4-hydroxyphenyl)N,N'-1,6-hexandiyl-bis (thiocarbamat)

Das in Beispiel 1 beschriebene Verfahren wird wiederholt, wobei 20,0 g 2,6-Di-t.-butyl-4-mercaptophenol, 7,1 g 1,6-Hexandiisocyanat und 0,5 g Triethylamin eingesetzt werden. Der Rückstand wird einmal aus Xylol und einmal aus Butanol umkristallisiert und ergibt 16,4 g (61 % der Theorie) weisser Kristalle mit einem Schmelzpunkt von 203-206°C.

Beispiel 5: S-(3,5-Di-t.-butyl-4-hydroxyphenyl)-N-n-octadecyl-thiocarbamat.

Das in Beispiel 1 beschriebene Verfahren wird wiederholt, wobei 11,9 g 2,6-Di-t.-butyl-4-mercaptophenol, 14,8 g n-Octadeylisocyanat und 0,5 g Triethylamin eingesetzt werden. Der Rückstand wird aus Acetonitril umkristallisiert und ergibt 12,4 g (46 % der Theorie) weisser Kristalle mit einem Schmelzpunkt von 63-65°C.

Beispiel 6: 1,1,5,5-Tetramethyl-1', 3-bis[S-(3,5-di-t.-butyl-4-hydroxyphenyl)thiocarbamyl]cyclohexan.

Das in Beispiel 1 beschriebene Verfahren wird wiederholt, wobei 11,9 g 2,6-Di-t.-butyl-4-mercaptophenol, 5,6 g 1,1,5,5-Tetramethyl-1',3-diisocyanat und 0,5 g Triethylamin eingesetzt werden. Der Rückstand wird aus Hexan umkristallisiert und ergibt 8,7 g (49 % der Theorie) weisser Kristalle mit einem Schmelzpunkt von 165 - 179°C.

Beispiel 7: Unstabilisiertes Polypropylenpulver (Hercules Profax® 6501) wird innig mit 0,2 Gew.-% eines Additivs vermischt. Während 5 Minuten wird die Mischung auf einer 2-Rollen Mühle bei 182°C gemahlen. Das gemahlene Polypropylen wird in einer hydraulischen Presse bei 220°C (1207,5 kPa) zu 0,127 mm dicken Filmen verpresst. Proben dieser Filme werden in einer fluoreszierenden Hell/Dunkel-Kammer auf Zersetzung geprüft. Die Zersetzung wird gemessen, wenn die Filme erste Risse oder Braunfärbung der Ränder zeigten.

| Additiv | Stunden bis Zersetzung |
|---|---|
| Keines | 200 - 300 |
| Nr. 2 | 370 |
| Nr. 3 | 390 |
| Nr. 4 | 380 |
| Nr. 5 | 380 |
| Nr. 6 | 325 |

Beispiel 8: Die Oxidationsstabilität von Polypropylen enthaltend 0,2 Gew.-% der Verbindungen der Formel I allein, sowie der Mischungen davon mit 0,3 Gew.-% Distearylthiodipropionat (DSTDP) in Plättchenform (0,635 mm Dicke) wird in einem Umluftofen bei 150°C gemessen. Bei erster Rissbildung bzw. Braunfärbung der Ränder wird die Zeit der Zersetzung ermittelt.

| Additiv 0,2 % | Stunden bis zur Zersetzung |
|---|---|
| Grundharz | $< 20$ |
| Grundharz + 0,3 % DSTDP | $< 20$ |
| Nr. 2 | 240 |
| Nr. 2 + 0,3 % DSTDP | 690 |
| Nr. 3 | $< 20$ |
| Nr. 3 + 0,3 % DSTDP | 200 |
| Nr. 4 | 70 |
| Nr. 4 + 0,3 % DSTDP | 540 |
| Nr. 5 | 120 |
| Nr. 5 + 0,3 % DSTDP | 445 |
| Nr. 6 | 310 |
| Nr. 6 + 0,3 % DSTDP | 715 |

Patentansprüche

1. Verbindungen der Formel I

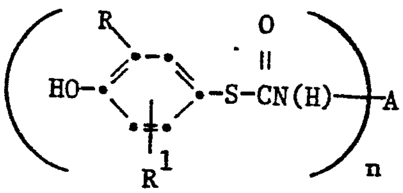

(I) ,

worin

R und $R^1$ unabhängig voneinander Wasserstoff, $C_1$-$C_{18}$-Alkyl, $C_5$-$C_6$-Cycloalkyl, Phenyl, $C_7$-$C_{18}$-Alkylphenyl, $C_7$-$C_9$-Phenylalkyl oder mit $C_1$-$C_{12}$-Alkyl substituiertes Phenylalkyl bedeuten, und n 1, 2 oder 3 ist, und falls n 1 ist, A $C_1$-$C_{30}$-Alkyl, $C_5$-$C_6$-Cycloalkyl, Phenyl oder $C_1$-$C_4$-Alkylbenzyl bedeutet und falls n 2 ist, A $C_1$-$C_{10}$-Alkylen, $C_5$-$C_6$-Cycloalkylen, $C_1$-$C_4$-Alkyl- und/oder Alkylen-substituiertes $C_5$-$C_6$-Cycloalkylen, Arylen, Biphenylen, Hydroxy-substituiertes Arylen oder Polyoxyalkylen mit 2 - 4 C-Atomen in den sich wiederholenden Einheiten bedeutet, und falls n 3 ist, A Arylen, Biphenylen, Hydroxy-substituiertes Arylen oder ferner $C_3$-$C_6$-Alkantriyl ist.

2. Verbindungen gemäss Anspruch 1 der Formel I worin, falls n 1 ist, A $C_4$-$C_{18}$-Alkyl oder Phenyl bedeutet, und falls n 2 ist A $C_4$-$C_8$-Alkylen, Phenylen oder $C_1$-$C_4$-Alkyl-substituiertes Cycloalkylen ist und falls n 3 ist A 1,3,5-Benzoltriyl bedeutet.

3. Verbindungen gemäss Anspruch 1, der Formel I, worin n 1 ist und A Phenyl oder $C_4$-$C_{18}$-Alkyl bedeutet.

4. Verbindungen gemäss Anspruch 1 der Formel I, worin n 2 ist und A $C_4$-$C_8$-Alkylen, Phenylen oder $C_1$-$C_4$-Alkyl-substituiertes Cyclohexylen ist.

5. Organisches Material enthaltend eine Verbindung der Formel I gemäss Anspruch 1.

6. Verwendung der Verbindungen der Formel I zum Stabilisieren von organischem Material.

FO 7.3 HPS/rz*